# EUROPÄISCHE PATENTSCHRIFT

(11) **EP 3 354 325 B1**
(45) Veröffentlichungstag und Bekanntmachung des Hinweises auf die Patenterteilung: **05.02.2020**
(21) Anmeldenummer: 17210552.0
(22) Anmeldetag: 22.12.2017
(51) Int. Cl.: A63C 5/12, A63C 5/04, B32B 7/12, B32B 3/04

(54) **UNTERGURT MIT KLAMMEREFFEKT**
BOTTOM REINFORCEMENT LAYER WITH CLIP EFFECT
RENFORT INFÉRIEURE À EFFET DE PINCE

(30) Priorität: 29.12.2016 DE 102016125895; 03.11.2017 DE 102017125770
(43) Veröffentlichungstag der Anmeldung: 01.08.2018
(73) Patentinhaber: Völkl Sports GmbH, 94315 Straubing (DE)
(72) Erfinder: Schmatz, Max, 94379 Sankt Englmar (DE)
(74) Vertreter: SSM Sandmair

(56) Entgegenhaltungen:
- EP-A1- 1 484 091
- DE-A1- 1 901 614
- US-A1- 2001 022 439

## Beschreibung

Die Erfindung betrifft einen Ski mit wenigstens einem Skikern, einem Skibelag, der eine Unterseite des Skis bildet, einem Untergurt, der zwischen dem Skikern und dem Skibelag angeordnet ist, Stahlkanten und Seitenwangen, die zum Beispiel zwischen einer dem Skikern zugewandten Oberseite der Stahlkanten und dem Skikern angeordnet sind. Erfindungsgemäß ist der flache Untergurt wenigstens vor dem Einbau in den Ski als Flachkörper zumindest in einem Bereich des Skis in einer Querrichtung zum Ski breiter als ein Abstand der Stahlkanten in Querrichtung zum Ski in diesem Bereich. Die Erfindung betrifft weiterhin einen Untergurt mit Klammereffekt.

Die Ansprüche der Kunden, insbesondere wenn sie gute Skifahrer sind, an das Sportgerät steigen ständig, egal ob es das Gewicht des Skis ist, das dynamische Verhalten während der Fahrt oder einfach nur die Optik. Da sich gleichzeitig auch die Beschaffenheit des Schnees durch zum Beispiel die künstliche Beschneiung verändert, ist es eine stete Anstrengung, das Sportgerät optimal zu konstruieren und auszustatten, um alte Kunden zufrieden zu stellen und neue zu gewinnen. Ein Aspekt, der verbessert werden kann, ist die Kraftübertragung vom Ski in den Untergrund beim Kanten.

Aus der US 2001/0022439 A1 ist ein Schneebrett bekannt, mit einem Untergurt, der sich zwischen den einander zugewandten Seiten der Stahlkanten und entlang einer Oberseite der Stahlkanten bis zu einem äußeren Umfang des Schneebretts erstreckt. Die EP 1 484 091 A1 betrifft einen Ski mit einer Torsionsbox, die zwischen einem Kern des Skikörpers und einer Lauffläche des Skis angeordnet ist. Die DE 1 901 614 befasst sich mit einem Ski mit einem Untergurt, der aus Glasfaser-Rovings besteht, die bereichsweise von aus gewickelten harzgetränkten Glasseidenbändern ummantelt sind.

Es ist daher eine Aufgabe der Erfindung, einen Ski zur Verfügung zu stellen, der konstruktiv optimiert wurde, um beim Kanten einen besseren Halt und eine verbesserte Kraftübertragung zu ermöglichen. Eine weitere Aufgabe ist es, ein modifiziertes Bauteil für den Ski zur Verfügung zu stellen.

Diese Aufgaben werden durch den Ski mit den Merkmalen des Anspruchs 1 und den Untergurt gemäß dem Anspruch 9 gelöst.

Ein erster Aspekt der Erfindung betrifft einen Ski, wobei der Ski zumindest einen Skikern, einen Skibelag, einen Untergurt, Seitenwangen und Stahlkanten umfasst. Optional kann der Ski einen Deckel und einen Obergurt umfassen.

Der Ski umfasst in einer Schnittansicht oben beginnend optional einen Deckel, der eine Oberseite des Skis bildet, einen Skikern, der zum Beispiel im Wesentlichen den Skikörper bildet, optional einen Obergurt, der zwischen dem Skikern und dem Deckel angeordnet ist, einen Skibelag, der eine Unterseite des Skis bildet, einen Untergurt, der zwischen dem Skikern und dem Skibelag angeordnet ist, Stahlkanten und Seitenwangen, die zum Beispiel zwischen einer dem Skikern zugewandten Oberseite der Stahlkanten und dem Skikern angeordnet sind, wobei die Seitenwangen Teile des Skikerns sind oder mit dem Skikern verbunden sein können, oder separate Seitenwangen des Skis sind. Bevorzugt ist es, wenn die Seitenwangen separate Teile sind. Optional kann der Ski einen weiteren Untergurt umfassen, der zwischen den zwei Stahlkanten liegt.

Der Untergurt ist zumindest in einem Bereich des Skis in einer Querrichtung zum Ski breiter als ein Abstand der Stahlkanten, respektive der sich zugewandten Enden der Stahlkanten, oder zwischen den Stahlkanten in Querrichtung zum Ski in diesem Bereich. Dabei ist die Breite des flachen Untergurts, das heißt, des Untergurts, der vollflächig auf einem flachen Untergrund aufliegt, breiter als der beschriebene Abstand. Als flacher Untergurt soll hier der Untergurt verstanden sein, der beispielsweise wie eine Schachtel vor dem Falten zweidimensional ist und keine dreidimensionalen Verformungen aufweist.

Der Ski mit dem erfindungsgemäßen Untergurt hat den Vorteil, dass er beim Kanten einen besseren Halt bietet und die Kraftübertragung vom Ski auf den Untergrund optimiert wird.

Eine Außen- oder Umfangsform des Untergurts ist so ausgebildet, dass der Untergurt sich in wenigstens einem Längenabschnitt des Skis beidseitig bis zu einer den Stahlkanten abgewandten Oberseite der Seitenwange respektive Seitenwangen erstreckt. Das heißt, dass der Untergurt sich in dem Bereich oberhalb des Skibelags parallel zu dem Skibelag bis zu einer Innenseite, das heißt, einer der Skiaußenseite abgewandten Seite der Seitenwange/n, erstrecken kann, dann parallel zu der Innenseite der Seitenwange/n in Höhenrichtung über die gesamte Höhe der Innenseite der Seitenwange/n verlaufen kann, und schließlich parallel zu der dem Skikern zugewandten Oberseite der Seitenwange/n zwischen dem Skikern und der dem Skikern zugewandten Oberseite der Seitenwange/n enden kann.

Mit anderen Worten erstreckt sich der Untergurt zumindest in dem wenigstens einen Längenabschnitt des Skis beidseitig bis auf eine den Stahlkanten abgewandte Oberseite der Seitenwangen, bevorzugt bis zu einer äußeren Kante der besagten Oberseite.

Der Längenabschnitt mit der Verbreiterung des Untergurts kann zum Beispiel ein in Skilaufrichtung vorderer und/oder hinterer Bereich des Skis sein, mit einem vor, hinter oder zwischen dem vorderen und/oder hinteren Bereich gelegenen Normalbereich, in dem der flache Untergurt nicht breiter ist als ein Abstand der beiden einander zugewandten Seiten der Stahlkanten des Skis zueinander. Der Längenabschnitt kann auch der Ski über seine gesamte Länge oder zumindest einen großen Teil seiner Länge, zum Beispiel ohne Spitze und nachlaufendes Ende, sein. Die genaue Längenerstreckung des Längenabschnitts/der Längenabschnitte ist nicht festgelegt und kann bei der Konstruktion eines Skis vom Fachmann so gewählt werden, dass die Anforderungen, die er an den Ski stellt, erfüllt werden.

Der wie oben beschrieben im Ski eingebaute Untergurt weist somit in einer Querschnittsansicht quer zur Skilängsachse in dem Längenabschnitt oder gewählten Bereich/den Längenabschnitten oder gewählten Bereichen eine Klammer- oder Flügelform auf, wobei die freien Enden der Klammer oder der Flügel beim fertigen Ski zwischen dem Skikern und der dem Skikern zugewandten Oberseite der Seitenwangen angeordnet sind. Dabei können die freien Enden in dem Bereich die gesamte Breite der dem Skikern zugewandten Oberseite der Seitenwangen überlappen, die Breite nur teilweise überlappen oder über die Seitenwangen nach außen vorstehen.

Der Untergurt kann ein einteiliges Halbzeug sein, das beispielsweise aus einem flachen flexiblen Material ausgestanzt oder ausgeschnitten wird. Bei der Herstellung des Skis kann der einteilige Untergurt dann beispielsweise in eine Form nach dem Skibelag, den Stahlkanten und den Seitenwangen eingelegt werden. Anschließend kann der Skikern in die Form eingelegt werden, der den Untergurt dann in die oben beschriebene Lage drückt. Um die Formung des Untergurts zu unterstützen, kann der Untergurt integrierte Biegelinien, durch zum Beispiel lokale Materialverdünnung, Perforation etc. aufweisen. Zwischen den einzelnen Lagen kann ein Adhäsiv, wie ein Leim, eingegeben werden, der dann in der Form unter Zuführung von Druck und/oder Wärme aushärtet und dabei die in die Form eingelegten Teile verbindet.

Handelt es sich bei dem Material für den Untergurt um ein relativ steifes Plattenmaterial, kann der ausgestanzte oder ausgeschnittene und eventuell mit Biegelinien versehene Untergurt zum Beispiel in einer Presse, mit oder ohne die Zuführung zusätzlicher Wärme, in einem entsprechenden Werkzeug verformt werden, bevor der Untergurt zur Weiterverarbeitung in der Skiproduktion verwendet werden kann.

Alternativ kann der Untergurt mehrteilig sein. Der Untergurt kann zum Beispiel ein erstes Teil umfassen, das sich im Wesentlichen über den gesamten Ski im Bereich des Skibelags in Längsrichtung zwischen den Stahlkanten erstreckt, so wie zum Beispiel ein klassischer Untergurt bei Skiern des Stands der Technik. Dieser Untergurt soll im Folgenden als weiterer Untergurt bezeichnet werden, um ihn sprachlich von dem erfindungsgemäßen Untergurt oder kurz Untergurt zu unterscheiden. Alternativ kann der weitere Untergurt in dem Bereich/Bereichen materialsparende Einschnürungen aufweisen, oder die Abschnitte des weiteren Untergurts, die in dem Bereich/den Bereichen liegen, können nur über einen oder mehrere Steg/e miteinander verbunden sein. Dadurch kann Gewicht eingespart und die Herstellungskosten des Skis gesenkt werden.

Der mehrteilige Untergurt umfasst ein zweites Teil und optional ein drittes Teil oder weitere Teile, das oder die die Verbreiterung/en des Untergurts oder die Klammer oder die Flügel in dem einen oder den zwei oder mehreren Bereich/en des Skis ausbildet/ausbilden. Das zweite oder die weiteren Teile werden bevorzugt ausschließlich in dem Bereich oder den Bereichen über den weiteren Untergurt gelegt. Sie erstrecken sich in Skilängsrichtung bevorzugt im Wesentlichen über die Länge des Bereichs oder der Bereiche und quer dazu bis auf die dem Skikern zugewandte Oberseite einer oder beider Seitenwangen, wie dies oben ausführlich beschrieben wurde. Der weitere Untergurt und das zweite, dritte usw. Teil können gemeinsam den oben beschrieben Untergurt bilden, respektive nachbilden.

Das zweite und/oder jedes weitere Teil des Untergurts umfasst ein Mittelteil, das mit dem weiteren Untergurt gefügt, zum Beispiel verklebt, werden kann. Dieses Verkleben kann außerhalb der oben genannten Form, das heißt, im Vorfeld der Skierzeugung erfolgen, oder erst nach dem Einlegen in die Form und der möglichen anschließenden Erwärmung und/oder Druckbeaufschlagung. Auch das zweite Teil oder jedes der weiteren Teile kann materialeinsparend zugeschnitten sein.

Der Untergurt, egal ob einteilig oder mehrteilig, kann aus einem einzigen Material bestehen oder zwei oder mehr Materialien umfassen. Beim einteiligen Untergurt können zum Beispiel Verbundmaterialien zum Einsatz kommen, beim zwei- oder mehrteiligen Untergurt kann das erste Teil aus einem ersten Material und das zweite und alle weiteren Teile aus einem zweiten Material oder das zweite Teil aus einem zweiten Material, das dritte Teil aus einem dritten Material usw. gebildet sein. Bei dem ersten und dem zweiten, dritten usw. Material kann es sich wiederum um unterschiedliche Verbundmaterialien handeln.

Ein weiterer Aspekt der Erfindung betrifft einen Untergurt und/oder weiteren Untergurt und die dazugehörigen ersten, zweiten, dritten etc. Teile, wie er/sie zum Beispiel in einem Lager bevorratet wird/werden, als Bauteil eines Skis. Im Folgenden wird zum zweiten Aspekt nur der Untergurt behandelt, wobei zum weiteren Untergurt und den Teilen Nämliches gilt.

Der Untergurt hat eine längliche Grundform, zum Beispiel eine Länge, die im Wesentlichen einer Länge des Skibelags des Skis entspricht, für den der Untergurt verwendet werden soll. Die Grundform weist Längenabschnitte oder Bereiche, in denen eine Breite quer zur Skilängsachse im Wesentlichen der Breite des Skis entspricht, und wenigstens einen Bereich oder Längenabschnitt mit flügelförmigen Verbreiterungen quer zur Längsrichtung auf, so dass der flache, zweidimensionale Untergurt in einem Bereich oder zwei oder mehr Bereichen eine größere Breite aufweist als der Ski, für den er verwendet werden soll, in dem/den nämlichen Bereich/en. Bei den Bereichen kann es sich insbesondere um die Bereiche des Skis handeln, die in Längsrichtung des Skis vor und/oder hinter der Skibindung liegen. Der Bereich kann aber auch der gesamte Bereich sein, in dem der Ski Seitenwangen aufweist. Der Untergurt kann folglich in einem Bereich vor der Skibindung und/oder in einem Bereich hinter der Skibindung oder auch über seine im Wesentlichen gesamte Länge breiter sein als der Skibelag des Skis, für den er verwendet wird, eventuell mit Ausnahme der Skispitze und/oder dem der Skispitze abgewandten Ende des Skis.

Bei dem Untergurt kann es sich beispielsweise um den zum ersten Aspekt beschriebenen Untergurt handeln.

Ausführungsbeispiele eines erfindungsgemäßen Skis und erfindungsgemäßer Untergurte sollen im Folgenden anhand von Figuren näher erläutert werden. Erfindungswesentliche Merkmale, die nur den Figuren entnommen werden können, zählen zum Umfang der Erfindung und können einzeln oder in gezeigten Kombinationen den Gegenstand von Anspruch 1 und/oder 9 vorteilhaft weiterbilden. Die Figuren zeigen:
- Figur 1:: die wesentlichen Bauteile eines erfindungsgemäßen Skis, separiert voneinander;
- Figur 2:: die Teile der Figur 1, teilweise miteinander verbunden;
- Figur 3:: erstes Ausführungsbeispiel eines erfindungsgemäßen Untergurts als Halbzeug;
- Figur 4:: zweites Ausführungsbeispiel eines erfindungsgemäßen Untergurts als Halbzeug; und
- Figur 5:: drittes Ausführungsbeispiel eines erfindungsgemäßen Untergurts als Halbzeug.

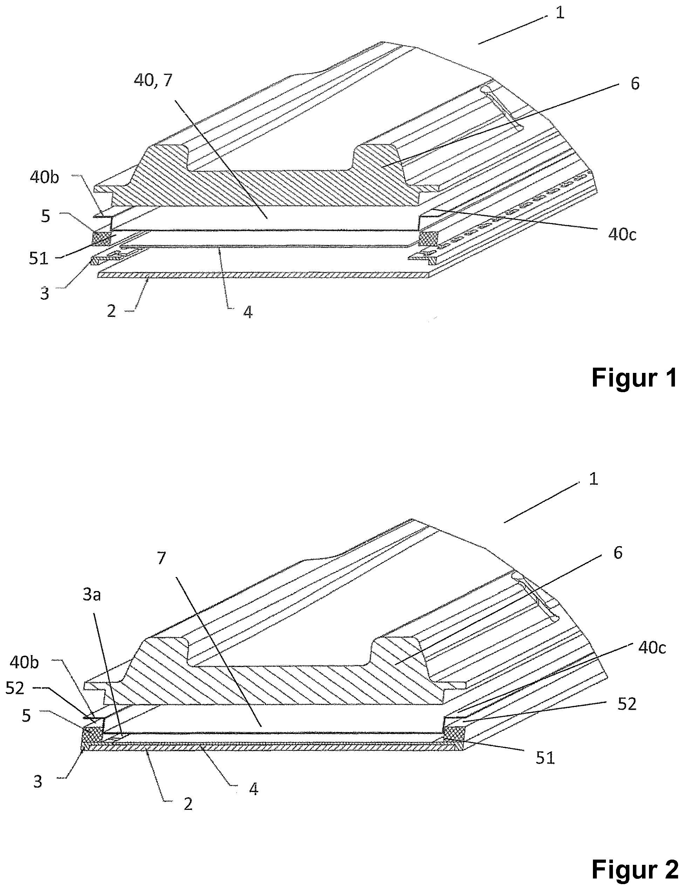

Die Figur 1 zeigt die wesentlichen Teile, aus denen ein Ski 1 gemäß der Erfindung besteht. Dargestellt sind die Einzelteile getrennt voneinander in einer Schnittansicht durch einen Bindungsbereich des Skis 1. Der Ski 1 umfasst einen Skibelag 2, Stahlkanten 3, einen weiteren Untergurt 4, Seitenwangen 5, einen Untergurt 40 oder ein Teil davon und einen Skikern 6. Optional kann der Ski 1 weiterhin einen nicht gezeigten Obergurt und einen nicht gezeigten Deckel, der die sichtbare Oberseite des Skis bildet, umfassen.

Wie zu sehen ist, ist der weitere Untergurt 4 so zugeschnitten, dass er zwischen den Stahlkanten 3 auf den Skibelag 2 gelegt werden kann. Der Untergurt 40 ist so geformt, dass er mit einem Mittelteil 7 auf dem weiteren Untergurt 4 aufliegt. Die quer zur Skilängsachse L weisenden Enden 40b, 40c des Untergurts 40 sind klammerförmig, so dass sie an der jeweiligen Seitenwange 5 an einer nach innen gewandten Längsseite 51 und auf der Oberseite 52 anliegen können.

Die Figur 2 zeigt den Ski 1 in einem teilweise zusammengebauten Zustand. Die Stahlkanten 3 liegen auf dem Skibelag 2 auf, der weitere Untergurt 4 liegt auf dem Skibelag 2 auf und die Seitenwangen 5 liegen auf einer Oberseite 3a der Stahlkanten 3 auf. Der Untergurt 40 ist noch nicht an seinem Platz, es ist aber gut zu sehen, dass das Mittelteil 7 auf dem weiteren Untergurt 4 und einer Oberseite 3a der Stahlkanten 3 aufliegen wird, und die seitlichen Enden 40b, 40c des Untergurts 40 an der Längsseite 51 und der Oberseite 53 der jeweiligen Seitenwange 5 anrespektive aufliegen werden.

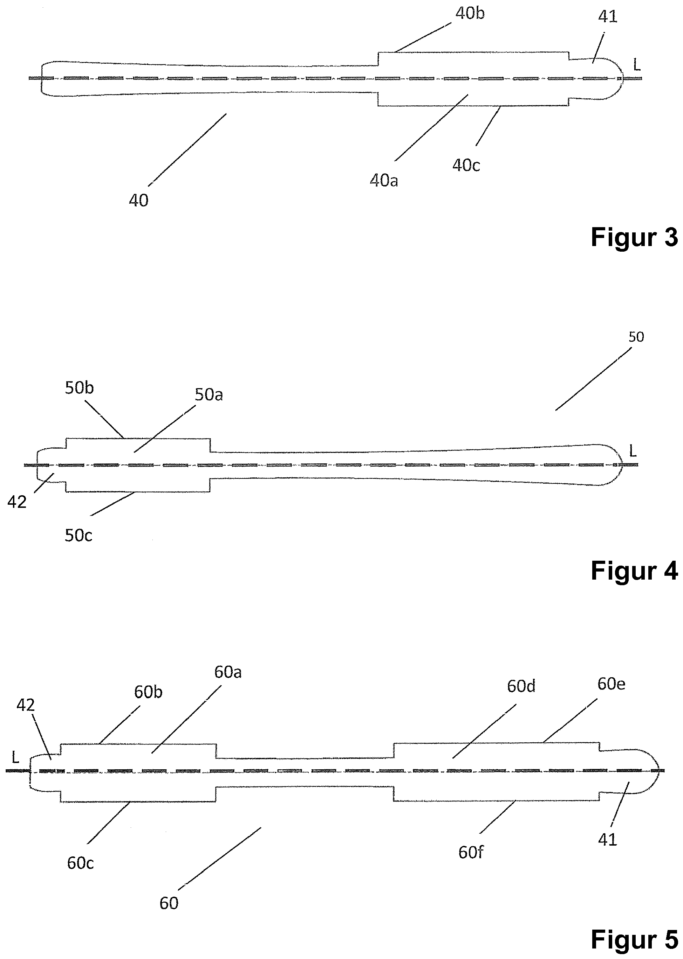

Die Figur 3 zeigt einen Untergurt 40 eines ersten Ausführungsbeispiels mit einem in Skilängsrichtung L oder Skilaufrichtung vorderen Bereich 40a und den Seiten 40b, 40c in einer Draufsicht. Der Untergurt 40 kann wie gezeigt aus einem zweidimensionalen, das heißt, flachen, Matten- oder Plattenmaterial ausgestanzt oder ausgeschnitten werden. Wenn das Material flexibel genug ist, kann es erst beim Zusammenbau des Skis 1 verformt werden, oder wenn das Material aushärtbar ist, kann es zum Beispiel durch Zuführung von Wärme und/oder Druckbeaufschlagung vorgeformt werden. Handelt es sich um ein steifes Material, so kann der Untergurt 40 zum Beispiel in einer Presse, mit oder ohne eine Zufuhr von Wärme, verformt bzw. vorgeformt werden, bevor er in den Ski 1 eingebaut wird.

Die Figur 4 zeigt einen Untergurt 50 eines zweiten Ausführungsbeispiels mit einem in Skilängsrichtung L oder Skilaufrichtung hinteren Bereich 50a und den Seiten 50b, 50c in einer Draufsicht. Wie erkennbar endet der hintere Bereich 50a vor dem hinteren Ende des Untergurts 50.

Die Figur 5 schließlich zeigt einen Untergurt 60 mit einem vorderen Bereich 60a mit den Seiten 60b, 60c und einem hinteren Bereich 60d mit den Seiten 60e und 60f in einer Draufsicht. Zwischen dem vorderen Bereich 60a und dem hinteren Bereich 60d entspricht die Breite des Untergurts 60 gemessen quer zur Skilaufrichtung der Breite des weiteren Untergurts 4, wie er zu den Figuren 1 und 2 beschrieben wurde. Dieser Zwischenbereich kann beispielsweise den Bereich umfassen, in dem eine Skibindung oder ein separater Vorderbacken und ein separater Hinterbacken mit dem Ski 1 verbunden werden können.

Eine Längenerstreckung der vorderen Bereiche 40a, 60a und hinteren Bereiche 50a, 60d kann frei gewählt werden, was bedeutet, dass diese sich auch in den Bereich hinein erstrecken können, in dem die Skibindung oder die Skihalteaggregate mit dem Ski verbunden werden können. Auch die Spitze 41 und das Ende 42 des Untergurts 40 können noch Bestandteil des vorderen Bereichs 40a; 60a oder des hinteren Bereichs 50a; 60d sein. Schließlich ist auch nicht ausgeschlossen, dass sich der Untergurt 40 über die Gesamtlänge des Skis oder des weiteren Untergurts 4 erstreckt.

### Bezugszeichenliste

- 1: Ski
- 2: Skibelag
- 3: Stahlkante
- 3a: Oberseite Stahlkante
- 4: weiterer Untergurt
- 40: Untergurt
- 40a: vorderer Bereich
- 40b: seitliches Ende
- 40c: seitliches Ende
- 41: Spitze
- 42: Ende
- 5: Seitenwange
- 50: Untergurt
- 50a: hinterer Bereich
- 50b: seitliches Ende
- 50c: seitliches Ende
- 51: Längsseite Seitenwange
- 52: Oberseite Seitenwange
- 6: Skikern
- 60: Untergurt
- 60a: vorderer Bereich
- 60b: seitliches Ende
- 60c: seitliches Ende
- 60d: hinterer Bereich
- 60e: seitliches Ende
- 60f: seitliches Ende
- 7: Mittelteil
- L: Skilängsachse

## Patentansprüche

1. Ski, wobei der Ski (1) umfasst:
a. einen Skikern (6),
b. einen Skibelag (2), der eine Unterseite des Skis (1) bildet,
c. einen Untergurt (40, 50, 60), der zwischen dem Skikern (6) und dem Skibelag (2) angeordnet ist,
d. Stahlkanten (3)
e. und Seitenwangen (5),
f. wobei der Untergurt (40, 50, 60) zumindest einen vorderen Bereich (40a; 60a) und/oder einen hinteren Bereich (40b; 60b) aufweist, der in Querrichtung zu einer Skilängsachse (L) breiter ist als ein Abstand der Stahlkanten (3) zueinander in Querrichtung zur Skilängsachse (L) in diesem Bereich
**dadurch gekennzeichnet, dass**
g. sich der Untergurt (40; 50; 60) in dem vorderen Bereich (40a; 60a) und/oder in dem hinteren Bereich (40b; 60b) beidseitig bis auf eine den Stahlkanten (3) abgewandten Oberseite (52) der Seitenwangen (5) erstreckt.

2. Ski nach Anspruch 1, wobei der Untergurt (40; 50; 60) zumindest in dem vorderen Bereich (40a; 60a) und/oder in dem hinteren Bereich (40b; 60b) klammerförmig ist.

3. Ski nach einem der vorhergehenden Ansprüche, wobei der Untergurt (40; 50; 60) zumindest in dem vorderen Bereich (40a; 60a) und/oder in dem hinteren Bereich (40b; 60b) erstreckende klammer- oder flügelförmige seitliche Enden (40b, 40c; 50b, 50c; 60b, 60c, 60e, 60f) aufweist.

4. Ski nach einem der vorhergehenden Ansprüche, wobei der Untergurt (40; 50; 60) mehrteilig ist, mit einem weiteren Untergurt (4), der sich im Wesentlichen über den gesamten Ski (1) im Bereich des Skibelags (2) in Längsrichtung (L) zwischen den Stahlkanten (3) erstreckt, und einem zweiten und optional einem dritten etc. Teil, das die Verbreiterung/en oder eine Klammer oder einen Flügel in dem vorderen Bereich (40a; 60a) und/oder hinteren Bereich (40b; 60b) bilden.

5. Ski nach dem vorhergehenden Anspruch, wobei das zweite und alle weiteren Teile des Untergurts (40; 50; 60) einen Mittelteil (7) umfassen, der bevorzugt vollflächig mit dem weiteren Untergurt (4) gefügt, zum Beispiel verklebt, ist.

6. Ski nach einem der vorhergehenden Ansprüche, wobei der Untergurt (40; 50; 60) aus einem einzigen Material oder unterschiedlichen Materialien bestehen kann.

7. Ski nach einem der drei vorhergehenden Ansprüche, wobei der weitere Untergurt (4) und das zweite Teil, das dritte Teil, usw. aus dem gleichen Material, den gleichen Materialien oder aus zumindest teilweise unterschiedlichen oder unterschiedlichen Materialien bestehen.

8. Untergurt zum Verbauen in einem Ski, wobei der Untergurt (40; 50; 60) in dem vorderen Bereich (50a; 50b) und/oder hinterem Bereich (40b; 50b) in einer zweidimensionalen flachen Form breiter ist, als der fertige Ski (1) in diesem Bereich, wobei der Untergurt (40; 50; 50) wenigstens eines der Ansprüche 1 bis 7 ist.

## Claims

1. A ski, wherein the ski (1) comprises:
a. a ski core (6);
b. a ski coating (2) which forms an underside of the ski (1);
c. a lower flange (40; 50; 60) which is arranged between the ski core (6) and the ski coating (2);
d. steel edges (3);
e. and side walls (5);
f. wherein the lower flange (40; 50; 60) comprises at least a front region (40a; 60a) and/or a rear region (40b; 60b) which is broader, in a direction transverse to a longitudinal axis (L) of the ski, than a distance between the steel edges (3) in the direction transverse to the longitudinal axis (L) of the ski in said region,
**characterised in that**
g. the lower flange (40; 50; 60) extends up to and onto an upper side (52) of the side walls (5) which faces away from the steel edges (3), in the front region (40a; 60a) and/or in the rear region (40b; 60b), on both sides.

2. The ski according to Claim 1, wherein the lower flange (40; 50; 60) is bracket-shaped, at least in the front region (40a; 60a) and/or in the rear region (40b; 60b).

3. The ski according to any one of the preceding claims, wherein the lower flange (40; 50; 60) comprises bracket-shaped or fin-shaped lateral ends (40b, 40c; 50b, 50c; 60b, 60c, 60e, 60f) which extend at least in the front region (40a; 60a) and/or in the rear region (40b; 60b).

4. The ski according to any one of the preceding claims, wherein the lower flange (40; 50; 60) comprises multiple parts, including: another lower flange (4) which extends between the steel edges (3) in the longitudinal direction (L), in the region of the ski coating (2), substantially over the entire ski (1); and a second and optionally a third, etc. part which forms the broadened portion(s) or a bracket or a fin in the front region (40a; 60a) and/or rear region (40b; 60b).

5. The ski according to the preceding claim, wherein the second and any subsequent parts of the lower flange (40; 50; 60) comprise a middle part (7) which is preferably joined, for example glued, to the other lower flange (4) over its whole surface.

6. The ski according to any one of the preceding claims, wherein the lower flange (40; 50; 60) can consist of a single material or different materials.

7. The ski according to any one of the preceding three claims, wherein the other lower flange (4) and the second part, third part, etc. consist of the same material, the same materials or of at least partially different materials or of different materials.

8. A lower flange for incorporating in a ski, wherein the lower flange (40; 50; 60) is broader, in a two-dimensional flat shape in the front region (50a; 50b) and/or rear region (40b; 50b), than the finished ski (1) in said region, wherein the lower flange (40; 50; 60) is at least one of Claims 1 to 7.

## Revendications

1. Ski, dans lequel le ski (1) comprend :
a. un noyau de ski (6),
b. un revêtement de ski (2), qui forme une face inférieure du ski (1),
c. un renfort inférieur (40; 50; 60), qui est disposé entre le noyau de ski (6) et le revêtement de ski (2),
d. des carres d'acier (3)
e. et des brides latérales (5),
f. dans lequel le renfort inférieur (40, 50, 60) présente au moins une zone avant (40a; 60a) et/ou une zone arrière (40b; 60b) qui, dans la direction transversale par rapport à un axe longitudinal (L) du ski, est plus large qu'une distance des carres d'acier (3) les unes par rapport aux autres dans la direction transversale par rapport à l'axe longitudinal (L) du ski dans cette zone,
**caractérisé en ce que**
g. le renfort inférieur (40; 50; 60) s'étend dans la zone avant (40a; 60a) et/ou dans la zone arrière (40b; 60b) des deux côtés jusqu'à une des faces supérieures (52) des brides latérales (5) opposées aux carres d'acier (3).

2. Ski selon la revendication 1, dans lequel le renfort inférieur (40; 50; 60) a une forme de pince au moins dans la zone avant (40a; 60a) et/ou dans la zone arrière (40b; 60b).

3. Ski selon une des revendications précédentes, dans lequel le renfort inférieur (40; 50; 60) présente des extrémités latérales en forme de pinces ou d'ailettes (40b, 40c; 50b, 50c; 60b, 60c, 60e, 60f) qui s'étendent dans la zone avant (40a; 60a) et/ou dans la zone arrière (40b; 60b).

4. Ski selon une des revendications précédentes, dans lequel le renfort inférieur (40; 50; 60) est composé de plusieurs pièces, avec un autre renfort inférieur (4), qui s'étend sensiblement sur tout le ski (1) au niveau du revêtement de ski (2) dans la direction longitudinale (L) entre les carres d'acier (3), et une deuxième pièce, et en option une troisième pièce, etc., qui forme(nt) l'élargissement (les élargissements) ou une pince ou une ailette dans la zone avant (40a; 60a) et/ou zone arrière (40b; 60b).

5. Ski selon la revendication précédente, dans lequel la deuxième et toutes les autres pièces du renfort inférieur (40; 50; 60) comprennent une pièce centrale (7) qui est jointe, par exemple collée, avec l'autre renfort inférieur (4) de préférence sur toute la surface.

6. Ski selon une des revendications précédentes, dans lequel le renfort inférieur (40; 50; 60) peut être composé d'un seul matériau ou de différents matériaux.

7. Ski selon une des trois revendications précédentes, dans lequel l'autre renfort inférieur (4) et la deuxième pièce, la troisième pièce, etc., sont composés du même matériau, des mêmes matériaux ou au moins en partie d'un matériau différent ou de matériaux différents.

8. Renfort inférieur pour une utilisation dans un ski, dans lequel le renfort inférieur (40; 50; 60) dans la zone avant (50a; 50b) et/ou la zone arrière (40b; 50b) est plus large, dans une forme plate en deux dimensions, que le ski fini (1) dans cette zone, dans lequel le renfort inférieur (40; 50; 50) est au moins selon une des revendications 1 à 7.
